# EUROPÄISCHE PATENTANMELDUNG

(11) **EP 3 859 622 A1**
(43) Veröffentlichungstag der Anmeldung: **04.08.2021**
(21) Anmeldenummer: 20200691.2
(22) Anmeldetag: 08.10.2020
(51) Int. Cl.: G06Q 10/06, G06Q 50/02

(54) **VERFAHREN ZUM ANALYSIEREN LANDWIRTSCHAFTLICHER DATEN**

(30) Priorität: 29.01.2020 DE 102020102149
(71) Anmelder: 365FarmNet Group KGaA mbh & Co KG, 33428 Harsewinkel (DE)
(72) Erfinder: Poppe-Kirchmann, Stephan, 59348 Lüdinghausen (DE); Grundmann, Marten, 10829 Berlin (DE)
(74) Vertreter: CLAAS Gruppe

(57) **Zusammenfassung**

Die Erfindung betrifft ein Verfahren zum Analysieren landwirtschaftlicher Daten mittels eines Analysetools (1) einer Serverplattform (2), wobei die Serverplattform (2) ein Empfangstool (3) aufweist, das eingerichtet ist, von einer Vielzahl landwirtschaftlicher Datenquellen (4) kontinuierlich personalisierte Rohdaten (5) zu landwirtschaftlichen Arbeitsprozessen, umfassend Nutzungsdaten und Betriebsdaten, zu empfangen, wobei ein Analyst (7) in einer Analyseroutine eine Analyseanfrage (8) an das Analysetool (1) stellt, wobei die Analyseanfrage (8) Analyseparameter umfasst, wobei das Analysetool (1) in einer Aggregationsroutine einen durch die Analyseparameter definierten Teil der Rohdaten (5) auswählt, anonymisiert und auf Basis der Analyseparameter zu Zustandsdaten (9) aggregiert, wobei die Zustandsdaten (9) einen aktuellen landwirtschaftlichen Zustand eines landwirtschaftlichen Produktionsbereichs betreffen und wobei das Analysetool (1) dem Analysten (7) die Zustandsdaten (9) zur Verfügung stellt.

## Beschreibung

Die Erfindung betrifft ein Verfahren zum Analysieren landwirtschaftlicher Daten mittels eines Analysetools einer Serverplattform gemäß Anspruch 1, ein Verfahren zum optimierten Bereitstellen landwirtschaftlicher Hilfsmittel und/oder Betriebsmittel mittels eines solchen Verfahrens gemäß Anspruch 13 sowie eine Serverplattform als solche gemäß Anspruch 14.

In der modernen Landwirtschaft kommt der datenbasierten Steigerung von Effizienz in allen Bereichen eine hohe Bedeutung zu. Während das Sammeln und Analysieren von Daten für landwirtschaftliche Anwender, beispielsweise Landwirte, längst zum Alltag gehört, ist es für externe Analysten, wie Banken, Versicherungen, Lieferanten und Hersteller, nicht möglich, ohne Weiteres auf die Daten der Anwender zuzugreifen.

Aus der WO 2011/019453 A1 ist ein Verfahren zum Sammeln landwirtschaftlicher Daten im landwirtschaftlichen Umfeld bekannt. Zusammen mit anderen Verfahren zum Sammeln landwirtschaftlicher Daten entstehen so immer größere Datensätze, die üblicherweise jedoch nur dem jeweiligen Anwender, insbesondere Landwirt, zur Verfügung stehen.

Es ist inzwischen möglich und nötig, landwirtschaftliche Betriebe als komplexe biochemische Fabriken zu betrachten, in denen unterschiedlichste Einflüsse, beispielsweise durch Saatgut, Pflanzenschutzmittel, landwirtschaftliche Maschinen und menschliche Entscheidungen, zusammenwirken. Diese biochemischen Fabriken wiederum sind abhängig von ihrem regionalen und überregionalen Umfeld. So sind die Umwelteinflüsse auf diverse landwirtschaftliche Betriebe in einer geographischen Region häufig ähnlich. Dadurch wäre es, bei entsprechendem Zugriff auf die notwendigen Daten, möglich, hohe Effizienzgewinne zu erzielen, indem ein Anwender nicht nur die eigenen Daten, sondern auch Daten benachbarter Anwender analysiert. Problematisch ist jedoch, dass der Anwender auf diese Daten keinen Zugriff hat.

Auch andere Analysten im landwirtschaftlichen Umfeld könnten durch die Analyse dieser technischen Daten wichtige Rückschlüsse auf Mikro- und Makrozusammenhänge in den biochemischen Fabriken der landwirtschaftlichen Betriebe schließen. So könnte ein Lieferant von Düngemitteln seine Lagerhaltung deutlich optimieren, wenn er Einblick in die konkreten Zustände der biochemischen landwirtschaftlichen Fabriken in seiner Umgebung hätte. Auch hier ist das Problem, dass er diesen Einblick nicht hat.

Der Erfindung liegt das Problem zugrunde, ein Verfahren zum Analysieren landwirtschaftlicher Daten anzugeben, das unter Berücksichtigung der Privatsphäre einzelner Anwender verbesserten Zugriff auf die technischen Daten der landwirtschaftlichen Betriebe erlaubt.

Das obige Problem wird durch die Merkmale von Anspruch 1 gelöst.

Wesentlich ist die grundlegende Erkenntnis, dass die besagten Daten bereits digital auf Serverplattformen gespeichert werden. Wird nun diese Serverplattform genutzt, um die Daten zu anonymisieren und zu aggregieren, wird es möglich, diversen Analysten die Möglichkeit zu eröffnen, eigene Analysen in diesen Datenbeständen zu definieren und abzuarbeiten, ohne dafür Zugriff auf die Rohdaten zu benötigen.

Im Einzelnen wird ein Verfahren zum Analysieren landwirtschaftlicher Daten mittels eines Analysetools einer Serverplattform vorgeschlagen, wobei die Serverplattform ein Empfangstool aufweist, das eingerichtet ist, von einer Vielzahl landwirtschaftlicher Datenquellen kontinuierlich personalisierte Rohdaten zu landwirtschaftlichen Arbeitsprozessen, umfassende Nutzungsdaten und Betriebsdaten, zu empfangen. Ein Analyst stellt in einer Analyseroutine eine Analyseanfrage an das Analysetool, wobei die Analyseanfrage Analyseparameter umfasst, wobei das Analysetool in einer Aggregationsroutine einen durch die Analyseparameter definierten Teil der Rohdaten auswählt, anonymisiert und auf Basis der Analyseparameter zu Zustandsdaten aggregiert. Die Zustandsdaten betreffen einen aktuellen landwirtschaftlichen Zustand eines landwirtschaftlichen Produktionsbereichs und das Analysetool stellt dem Analysten die Zustandsdaten zur Verfügung.

Die Ausgestaltungen gemäß Anspruch 2 geben die bevorzugten Anwendungsbereiche des vorschlagsgemäßen Verfahrens an. Die Ausgestaltungen gemäß Anspruch 3 geben dann die bevorzugten Ausgestaltungen der unterschiedlichen Daten an.

Bei der Ausgestaltung gemäß Anspruch 4 betreffen die Datenquellen mehrere landwirtschaftliche Anwender, die untereinander keinen Zugriff auf die einem anderen Anwender zugeordneten Datenquellen haben.

In der bevorzugten Ausgestaltung gemäß Anspruch 5 umfassen die Datenquellen Sensoren landwirtschaftlicher Arbeitsmaschinen und/oder von den landwirtschaftlichen Anwendern mit einem Dokumentationstool der Serverplattform durchgeführte Dokumentationsroutinen oder anwenderunabhängige Datenquellen. So lassen sich besonders relevante landwirtschaftliche Daten abbilden.

Bei einer Ausgestaltung gemäß Anspruch 6 umfassen die Rohdaten Echtzeit-Rohdaten. Dadurch wird es dem Analysten möglich, einen sehr aktuellen Zustand des technischen Systems "landwirtschaftlicher Betrieb" zeitnah und aktuell zu analysieren. Die Ausgestaltungen gemäß Anspruch 7 betreffen ebenfalls die Möglichkeit, Echtzeit-Daten zu analysieren.

Es ist auch vorteilhaft, wenn ein Anwender Zugriff auf die Zustandsdaten anderer Anwender, in anonymisierter und aggregierter Form, erhält. Dies ist bei der Ausgestaltung gemäß Anspruch 8 vorgesehen, sodass der Anwender in der Lage ist, seine eigenen Daten mit einem Benchmark aus Daten anderer Anwender zu vergleichen.

Bei der Ausgestaltung gemäß Anspruch 9 ist die Analyseanfrage eine Marktanalyseanfrage, wodurch insbesondere Analysten, die keine Anwender sind, Zugriff auf die Zustandsdaten erhalten können.

Bei der Ausgestaltung gemäß Anspruch 10 kann vorgesehen sein, dass einige der Daten für die Analyseanfrage überhaupt erst ausgelöst durch diese Analyseanfrage gesammelt werden.

Bei der bevorzugten Ausgestaltung gemäß Anspruch 11 umfassen die landwirtschaftlichen Datenquellen verschiedenen Anwendern zugeordnete Sensoren.

Gemäß Anspruch 12 kann es vorgesehen sein, dass der Analyst in einer Analyseumgebung der Serverplattform ein Analyseergebnis erhält, das regelmäßig aktualisiert wird.

Nach einer weiteren Lehre gemäß Anspruch 13, der eigenständige Bedeutung zukommt, wird ein Verfahren zum optimierten Bereitstellen landwirtschaftlicher Hilfsmittel und/oder Betriebsmittel durch den Analysten unter Verwendung der Zustandsdaten beansprucht. Auf alle Ausführungen zu dem vorschlagsgemäßen Verfahren und insbesondere den Zustandsdaten darf verwiesen werden.

Nach einer weiteren Lehre gemäß Anspruch 14, der ebenfalls eigenständige Bedeutung zukommt, wird eine Serverplattform ausgestaltet zur Verwendung in einem vorschlagsgemäßen Verfahren beansprucht. Auf alle Ausführungen zu den vorschlagsgemäßen Verfahren darf verwiesen werden.

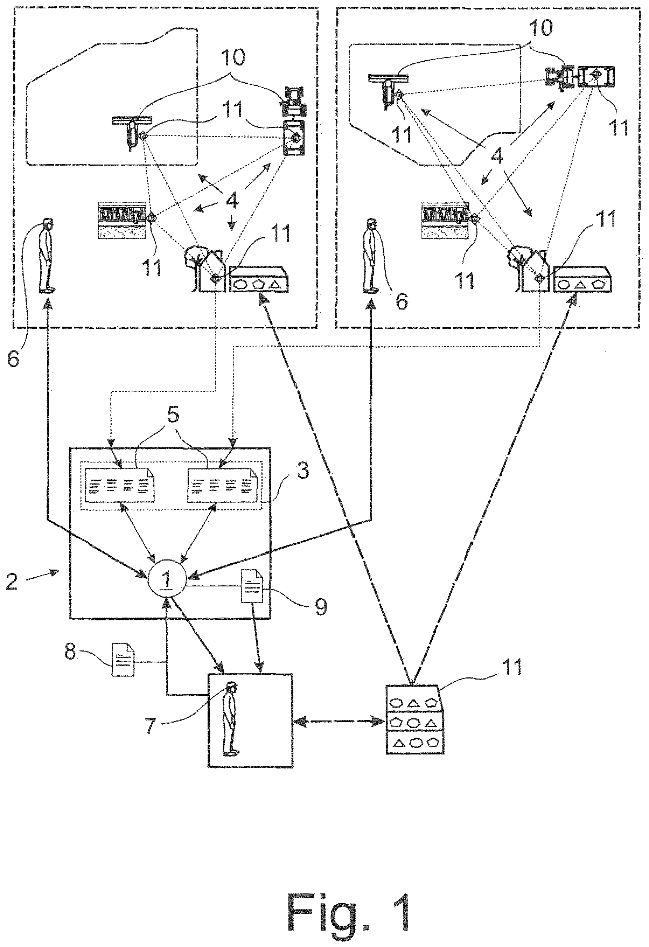

Im Folgenden wird die Erfindung anhand einer lediglich ein Ausführungsbeispiel darstellenden Zeichnung näher erläutert. In der Zeichnung zeigt
- Fig. 1: schematisch das vorschlagsgemäße Verfahren zum Analysieren landwirtschaftlicher Daten im landwirtschaftlichen Umfeld.

Fig. 1 zeigt schematisch das vorschlagsgemäße Verfahren zum Analysieren landwirtschaftlicher Daten mittels eines Analysetools 1 einer Serverplattform 2. Die landwirtschaftlichen Daten können dabei ganz unterschiedliche technische Aspekte eines landwirtschaftlichen Betriebs betreffen. Sie können ganz allgemein eine Tierhaltung oder eine Feldbewirtschaftung, jedoch auch sehr speziell das Füttern eines spezifischen Tieres oder das Ernten einer spezifischen Pflanze betreffen. Weitere Beispiele werden im Folgenden noch genannt.

Die Serverplattform 2 kann einen oder mehrere Server und ein Computerprogramm umfassen und muss nicht zwingend auf einen Ort beschränkt sein. Mindestens umfasst die Serverplattform 2 eine Hardwarekomponente, die ein Computerprogramm ausführt. Grundsätzlich kann vorgesehen sein, dass die Serverplattform 2 einen Computer und/oder ein mobiles Gerät umfasst. So kann beispielsweise ein Teil eines Computerprogramms der Serverplattform 2 auf dem Computer installiert sein. Prinzipiell ist auch eine dezentrale Ausführungsform der Serverplattform 2 denkbar. Zur Kommunikation umfasst die Serverplattform 2 zumindest ein Eingabegerät und ein Ausgabegerät, beispielsweise den Computer, oder steht mit diesem, zumindest zeitweise, in Verbindung.

Die Serverplattform 2 weist ein Empfangstool 3 auf, das eingerichtet ist, von einer Vielzahl landwirtschaftlicher Datenquellen 4 kontinuierlich personalisierte Rohdaten 5 zu landwirtschaftlichen Arbeitsprozessen zu empfangen. Hier und vorzugsweise empfängt das Empfangstool von einer Vielzahl landwirtschaftlicher Datenquellen 4 kontinuierlich personalisierte Rohdaten 5 zu landwirtschaftlichen Arbeitsprozessen. Die landwirtschaftlichen Arbeitsprozesse können, wie die landwirtschaftlichen Daten, ganz unterschiedliche landwirtschaftliche Arbeiten betreffen. Die personalisierten Rohdaten 5 umfassen Nutzungsdaten und Betriebsdaten, die einem bestimmten landwirtschaftlichen Anwender 6 zugeordnet sind oder zugeordnet werden können. Die Nutzungsdaten betreffen dabei die Nutzung insbesondere landwirtschaftlicher Hilfsmittel und/oder Betriebsmittel, während die Betriebsdaten allgemeinere Daten wie das Vorhandensein und/oder die Art der Hilfsmittel und/oder Betriebsmittel betreffen.

In einer Analyseroutine stellt ein Analyst 7 eine Analyseanfrage 8 an das Analysetool 1. Die Analyseanfrage 8 kann dabei verschiedene Aspekte der landwirtschaftlichen Arbeitsprozesse betreffen. Ganz allgemein betrifft sie die landwirtschaftlichen Daten und lässt sich mittels der Rohdaten 5 beantworten. Sie kann beispielsweise den Verbrauch eines Düngemittels oder eines Pflanzenschutzmittels in der Umgebung eines Lieferanten betreffen. Die Analyseanfrage 8 umfasst Analyseparameter. Ein Analyseparameter könnte dann entsprechend einen Zeitraum betreffen, in dem der Verbrauch des Düngemittels analysiert werden soll.

Das Analysetool 1 wählt in einer Aggregationsroutine einen durch die Analyseparameter definierten Teil der Rohdaten 5 aus, anonymisiert diesen Teil und aggregiert auf Basis der Analyseparameter diesen Teil der Rohdaten 5 zu Zustandsdaten 9. Der Begriff "aggregieren" betrifft dabei die übliche, datentechnische, Verwendung des Begriffs und meint das Entfernen von Komplexität aus den Rohdaten 5. Der Begriff "aggregieren" ist weit zu verstehen. Beim anonymisieren werden personenbezogene Daten aus den Rohdaten 5 entfernt und es wird sichergestellt, dass keine Rückschlüsse auf den konkreten Anwender 6 aus den Zustandsdaten 9 möglich sind.

Die Zustandsdaten 9 betreffen einen aktuellen landwirtschaftlichen Zustand eines landwirtschaftlichen Produktionsbereichs und das Analysetool 1 stellt dem Nutzer 7 die Zustandsdaten 9 zur Verfügung. Das zur Verfügung stellen umfasst ein Anzeigen und/oder für weitere Analysen Nutzbarmachen der Zustandsdaten 9. Landwirtschaftliche Produktionsbereiche sind dabei insbesondere die Tierzucht und der Ackerbau. Der Zustand kann ein allgemeiner Zustand beispielsweise der Tierzucht, aber auch ein konkreter Zustand beispielsweise eines Tieres sein.

Die Rohdaten 5 können von den landwirtschaftlichen Datenquellen 4 kontinuierlich bereitgestellt werden. Das bedeutet, dass zumindest eine der landwirtschaftlichen Datenquellen 4 regelmäßig Rohdaten 5 zur Verfügung stellen. Es ist jedoch nicht nötig, dass die Rohdaten 5 unterbrechungsfrei zur Verfügung gestellt werden. Die Analyseroutine und die Aggregationsroutine laufen vorzugsweise nacheinander ab. Genauso vorteilhaft können sie jedoch auch ineinander verzahnt ablaufen, wobei insbesondere der Analyst 7 einen Teil der Analyseparameter definieren kann, anschließend der Teil der Rohdaten 5 ausgewählt und anonymisiert wird, anschließend weitere Analyseparameter vom Analysten 7 definiert werden, gegebenenfalls auch mehrfach auf Basis des gleichen Teils der Rohdaten 5, und anschließend der Teil der Rohdaten 5 zu den Zustandsdaten 9 aggregiert wird.

Die Analyseparameter dienen dazu, den zur Beantwortung der Analyseanfrage 8 notwendigen Teil der Rohdaten 5 auszuwählen. Die Analyseparameter können ein landwirtschaftliches Hilfsmittel, insbesondere ein Pflanzenschutzmittel und/oder ein landwirtschaftliches Betriebsmittel, insbesondere eine landwirtschaftliche Arbeitsmaschine 10 betreffen. Hilfsmittel sind dabei jene Mittel, die einen direkten Einfluss auf einen landwirtschaftlichen Ertrag haben und insbesondere Verbrauchsmittel sind und Betriebsmittel sind jene Mittel, die ganz allgemein für den landwirtschaftlichen Betrieb benötigt werden. Die landwirtschaftlichen Arbeitsprozesse können die Bereiche Agrarchemie und/oder Saatgut und/oder Landtechnik und/oder Tiergesundheit betreffen. Hier und vorzugsweise umfassen die Analyseparameter Randbedingungen zur Auswahl der Rohdaten 5. Ein Beispiel für eine solche Randbedingung wäre, dass nur Daten von landwirtschaftlichen Betrieben gesucht werden, die einen Dünger eines bestimmten Düngerherstellers oder Düngerlieferanten verwenden.

Die Arbeitsprozesse können die Nutzung der Hilfsmittel und/oder Betriebsmittel betreffen. Zusätzlich oder alternativ können die Zustandsdaten 9 Nutzungsdaten des Hilfsmittels und/oder Betriebsmittels umfassen. Die Betriebsdaten könne Daten zu einem einem landwirtschaftlichen Anwender 6 zugeordneten landwirtschaftlichen Betrieb, insbesondere Arbeitsmaschinendaten, umfassen. In Fig. 1 sind beispielhaft zwei landwirtschaftliche Betriebe mit jeweils landwirtschaftlichen Anwendern 6 dargestellt. Der Analyst 7 ist hierbei beispielsweise ein Lieferant für Düngemittel. Um die Menge an Düngemitteln in seinem Lager 11 zu optimieren, benötigt er Daten darüber, wie viel Düngemittel in den beiden landwirtschaftlichen Betrieben genutzt wird. Die Nutzung von Düngemitteln in von ihm nicht belieferten Betrieben hingegen ist hier irrelevant. Er benötigt daher direkten Einblick in die Abläufe der biochemischen Fabrik "landwirtschaftlicher Betrieb", die ihm erst durch das vorschlagsgemäße Verfahren zur Verfügung gestellt werden.

Es ist hier und vorzugsweise vorgesehen, dass die Datenquellen 4 mehrere landwirtschaftliche Anwender 6 betreffen. Einem Anwender 6 können dabei unterschiedliche Datenquellen 4 zugeordnet sein, wie in Fig. 1 dargestellt. Es kann dann vorgesehen sein, dass ein erster der Anwender 6 über die Serverplattform 2 Zugriff auf die dem ersten Anwender 6 zugeordneten Datenquellen 4 und die, insbesondere vollständigen, Rohdaten 5 der dem ersten Anwender 6 zugeordneten Datenquellen 4 hat und dass ein zweiter der Anwender 6 über die Serverplattform 2 keinen Zugriff auf die dem ersten Anwender 6 zugeordneten Datenquellen 4 und die, insbesondere vollständigen, Rohdaten 5 der dem ersten Anwender 6 zugeordneten Datenquellen 4 hat. Hier und vorzugsweise ist vorgesehen, dass die meisten der Anwender 6 keinen Zugriff auf die Datenquellen 4 und die Rohdaten 5 der anderen Anwender 6 haben. Dies kann bedeuten, dass mindestens 50% der Anwender 6 keinen Zugriff auf die Datenquellen 4 und die Rohdaten 5 von mindestens 50% der anderen Anwender 6 haben. Weiter vorzugsweise kann dieser Prozentsatz bei 75%, noch weiter vorzugsweise bei 95% liegen. Es mag jedoch, beispielsweise im Rahmen von Kooperationen unter Anwendern 6, vorgesehen sein, dass zumindest einige der Anwender 6 zumindest teilweise Zugriff auf die Datenquellen 4 und/oder die Rohdaten 5 von zumindest einigen Anwendern 6 haben.

Hier und vorzugsweise umfassen die Datenquellen 4 Sensoren 11 landwirtschaftlicher Arbeitsmaschinen 10, insbesondere landwirtschaftlicher Fahrzeuge. So wird es möglich, aktuelle und präzise Daten gegebenenfalls automatisiert zu sammeln. Zusätzlich oder alternativ können die Datenquellen 4 von den Anwendern 6 mit einem Dokumentationstool der Serverplattform 2 durchgeführte Dokumentationsroutinen umfassen. Dabei kann es sich beispielsweise um die Dokumentation der Ausbringung eines Pflanzenschutzmittels durch den Anwender 6 handeln. Diese Dokumentation ist vielerorts bereits aus rechtlicher Sicht notwendig und kann daher gut als Datenquelle 4 genutzt werden. Die Datenquellen 4 können auch anwenderunabhängige Datenquellen 4, insbesondere Wetterdatenquellen wie einen Wettersatelliten, umfassen.

Die Rohdaten 5 umfassen hier und vorzugsweise Daten, die innerhalb eines vorgegebenen Zeitraums, vorzugsweise eines Monats oder einer Woche oder eines Tages, vor dem Stellen der Analyseanfrage 8 erzeugt wurden. Zusätzlich oder alternativ können die Rohdaten 5 Echtzeit-Rohdaten umfassen. Insbesondere mittels der Echtzeit-Rohdaten kann es so möglich werden, dass beispielsweise eine tag- oder sogar stundengenaue Planung des Lagerbestands des Lagers 11 erfolgt. Auch für andere Analysten 7 sind Echtzeit-Rohdaten vorteilhaft. Der Begriff "Echtzeit" ist in diesem Zusammenhang weit zu verstehen und bedeutet, dass die Daten in einem vorgegebenen Zeitraum vor dem Stellen der Analyseanfrage erzeugt wurden,, der höchstens eine halbe Stunde, bevorzugt höchstens wenige Sekunden, z.B. höchstens 30 Sekunden, besonders bevorzugt höchstens wenige Bruchteile von Sekunden, z.B. höchstens eine halbe Sekunde, beträgt.

Es kann vorgesehen sein, dass die Serverplattform 2 eine Echtzeit-Datenbank aufweist und dass zumindest ein Teil der landwirtschaftlichen Datenquellen 4 mehrfach, insbesondere kontinuierlich, Echtzeit-Rohdaten an die Echtzeit-Datenbank übermittelt und das Analysetool 1 diese in der Aggregationsroutine zu den Zustandsdaten 9 aggregiert. Dies ist besonders dann vorteilhaft, wenn, wie noch erläutert wird, ein Analyseergebnis mehrfach, insbesondere kontinuierlich, aktualisiert wird.

Hier und vorzugsweise kommt auch ein Anwender 6 als Analyst 7 in Frage. Denn auch wenn der Anwender 6 Zugriff auf seine eigenen Daten hat, hat er üblicherweise keinen Zugriff auf Daten anderer Anwender 6. Hier und vorzugsweise weist die Serverplattform 2 ein Benchmarking-Tool auf, das aus den Rohdaten 5 Benchmarking-Daten erzeugt. Vorzugsweise vergleicht das Benchmarking-Tool die Rohdaten 5 eines Anwenders 6 mit den Benchmarking-Daten. Es kann vorgesehen sein, dass das Benchmarking-Tool dem Anwender 6 basierend auf dem Vergleich landwirtschaftliche Maßnahmen zur Verbesserung der Arbeitsprozesse des Anwenders 6, vorzugsweise hinsichtlich der Verwendung, insbesondere einer Reduktion der Verwendung, der landwirtschaftlichen Hilfsmittel und/oder Betriebsmittel, vorschlägt. Beispielsweise könnten diese Benchmarking-Daten eine Analyse des Ertrags auf Basis eines Düngemittelverbrauchs enthalten, und dem Anwender 6 mitteilen, dass er mehr Dünger verwendet, als notwendig und vorschlagen, weniger Dünger zu verwenden.

Die Analyseanfrage 8 kann auch eine Marktanalyseanfrage sein, die einen Verlauf der Nutzung des Hilfsmittels und/oder Betriebsmittels in einer aktuellen landwirtschaftlichen Periode betrifft. Die landwirtschaftliche Periode kann beispielsweise eine Ernteperiode, jedoch auch ein einzelner Tag oder Ähnliches sein. Diese Marktanalyseanfrage wiederum könnte von dem bereits erwähnten Lieferanten eines Düngemittels stammen. Vorzugsweise umfassen die Zustandsdaten 9 Nutzungsverlaufsdaten und mit den Nutzungsverlaufsdaten verknüpfte Lokalisationsdaten. Die Lokalisationsdaten können sich dabei beispielsweise auf eine bestimmte Region in der Umgebung des Lieferanten beziehen.

Bezüglich der bereits angesprochenen Dokumentationsroutine kann vorgesehen sein, dass ein Anwender 6 landwirtschaftliche Arbeitsprozesse mittels eines Dokumentationstools der Serverplattform 2 durch Eingabe der Rohdaten 5 dokumentiert. Vorzugsweise gibt das Dokumentationstool dem Anwender 6 Fragen zur Beantwortung vor. Diese Fragen können spezifisch darauf gerichtet sein, bestimmte Rohdaten 5 zu ermitteln. Vorzugsweise beantwortet der Anwender 6 die Fragen. Die Fragen werden hier und vorzugsweise basierend auf der Analyseanfrage 8 erzeugt und/oder angepasst. So wird es sogar möglich, für die Analyseanfragen 8 nicht vorhandene Daten durch eine Befragung des Anwenders 6 zu ermitteln.

Wie bereits erwähnt, können die landwirtschaftlichen Datenquellen 4 Sensoren 11 umfassen. Diese Sensoren 11 sind hier und vorzugsweise verschiedenen Anwendern 6 zugeordnet. Insbesondere sind die Sensoren 11 Sensoren 11 landwirtschaftlicher Arbeitsmaschinen 10. Vorzugsweise umfassen die Zustandsdaten 9 Echtzeit-Sensordaten der Sensoren 11.

Zur Unterstützung des Analysten 7 kann die Serverplattform 2 dem Analysten 7 eine Analyseumgebung bereitstellen, in der der Analyst 7 die Analyseanfrage 8 stellen kann. Vorzugsweise werden die Zustandsdaten 9 und/oder ein auf den Zustandsdaten 9 basierendes Analyseergebnis regelmäßig von der Serverplattform 2 auf Basis der Echtzeit-Rohdaten aktualisiert. Dies hat unter anderem den Vorteil, dass der Analyst 7 die Analyseanfrage 8 nicht regelmäßig wiederholen muss. Es kann auch vorgesehen sein, dass das Analyseergebnis bei Eintreten eines vordefinierten Ereignisses, insbesondere dem Empfangen bestimmter Rohdaten 5, automatisch aktualisiert wird.

Gemäß einer weiteren Lehre, der eigenständige Bedeutung zukommt, wird ein Verfahren zum optimierten Bereitstellen landwirtschaftlicher Hilfsmittel und/oder Betriebsmittel durch den Analysten 7 unter Verwendung der Zustandsdaten 9 vorgeschlagen. Wesentlich nach dieser weiteren Lehre ist, dass der Analyst 7, insbesondere automatisch, basierend auf den Zustandsdaten 9 landwirtschaftliche Hilfsmittel und/oder Betriebsmittel für einen Anwender 6 bereitstellt. Diese weitere Lehre führt insbesondere das bereits erwähnte Beispiel des Lieferanten weiter aus. Hat dieser die Zustandsdaten 9 zur Verfügung, kann er automatisch und zeitnah selbst Düngemittel nachbestellen und dem Anwender 6 zur Verfügung stellen. Auf alle Ausführungen zu dem vorschlagsgemäßen Verfahren darf verwiesen werden. Insbesondere darf auf alle Ausführungen zu den Zustandsdaten 9 verwiesen werden.

Gemäß noch einer weiteren Lehre, der eigenständige Bedeutung zukommt, wird eine Serverplattform 2 als solche ausgestaltet zur Verwendung in einem vorschlagsgemäßen Verfahren vorgeschlagen. Auf alle Ausführungen zu dem vorschlagsgemäßen Verfahren darf verwiesen werden. Hier und vorzugsweise umfasst die Serverplattform 2 zumindest einen Server und ein Computerprogramm. Auch dem Computerprogramm kommt dabei eigenständige Bedeutung zu. Hier und vorzugsweise weist die Serverplattform 2 ein Empfangstool 3 und ein Analysetool 1 auf.

### Bezugszeichenliste

- 1: Analysetool
- 2: Serverplattform
- 3: Empfangstool
- 4: Landwirtschaftliche Datenquelle
- 5: Rohdaten
- 6: Anwender
- 7: Analyst
- 8: Analyseanfrage
- 9: Zustandsdaten
- 10: Landwirtschaftliche Arbeitsmaschine
- 11: Sensor

## Patentansprüche

1. Verfahren zum Analysieren landwirtschaftlicher Daten mittels eines Analysetools (1) einer Serverplattform (2),
wobei die Serverplattform (2) ein Empfangstool (3) aufweist, das eingerichtet ist, von einer Vielzahl landwirtschaftlicher Datenquellen (4) kontinuierlich personalisierte Rohdaten (5) zu landwirtschaftlichen Arbeitsprozessen, umfassend Nutzungsdaten und Betriebsdaten, zu empfangen,
wobei ein Analyst (7) in einer Analyseroutine eine Analyseanfrage (8) an das Analysetool (1) stellt, wobei die Analyseanfrage (8) Analyseparameter umfasst, wobei das Analysetool (1) in einer Aggregationsroutine einen durch die Analyseparameter definierten Teil der Rohdaten (5) auswählt, anonymisiert und auf Basis der Analyseparameter zu Zustandsdaten (9) aggregiert, wobei die Zustandsdaten (9) einen aktuellen landwirtschaftlichen Zustand eines landwirtschaftlichen Produktionsbereichs betreffen und wobei das Analysetool (1) dem Analysten (7) die Zustandsdaten (9) zur Verfügung stellt.

2. Verfahren nach Anspruch 1, **dadurch gekennzeichnet, dass** die Analyseparameter ein landwirtschaftliches Hilfsmittel, insbesondere ein Pflanzenschutzmittel, und/oder ein landwirtschaftliches Betriebsmittel, insbesondere eine landwirtschaftliche Arbeitsmaschine (10), betreffen, und/oder, dass die landwirtschaftlichen Arbeitsprozesse die Bereiche Agrarchemie und/oder Saatgut und/oder Landtechnik und/oder Tiergesundheit betreffen, und/oder, dass die Analyseparameter Randbedingungen zur Auswahl der Rohdaten (5) umfassen.

3. Verfahren nach Anspruch 1 oder 2, **dadurch gekennzeichnet, dass** die Arbeitsprozesse die Nutzung der Hilfsmittels und/oder Betriebsmittels betreffen, und/oder, dass die Zustandsdaten (9) Nutzungsdaten des Hilfsmittels und/oder Betriebsmittels umfassen, und/oder, dass die Betriebsdaten Daten zu einem einem landwirtschaftlichen Anwender (6) zugeordneten landwirtschaftlichen Betrieb, insbesondere Arbeitsmaschinendaten, umfassen.

4. Verfahren nach einem der vorhergehenden Ansprüche, **dadurch gekennzeichnet, dass** die Datenquellen (4) mehrere landwirtschaftliche Anwender (6) betreffen, dass einem Anwender (6) unterschiedliche Datenquellen (4) zugeordnet sind, dass ein erster der Anwender (6) über die Serverplattform (2) Zugriff auf die dem ersten Anwender (6) zugeordneten Datenquellen (4) und die, insbesondere vollständigen, Rohdaten (5) der dem ersten Anwender (6) zugeordneten Datenquellen (4) hat und dass ein zweiter der Anwender (6) über die Serverplattform (2) keinen Zugriff auf die dem ersten Anwender (6) zugeordneten Datenquellen (4) und die, insbesondere vollständigen, Rohdaten (5) der dem ersten Anwender (6) zugeordneten Datenquellen (4) hat.

5. Verfahren nach einem der vorhergehenden Ansprüche, **dadurch gekennzeichnet, dass** die Datenquellen (4) Sensoren (11) landwirtschaftlicher Arbeitsmaschinen (10), insbesondere landwirtschaftlicher Fahrzeuge, umfassen, und/oder, dass die Datenquellen (4) von den Anwendern (6) mit einem Dokumentationstool der Serverplattform (2) durchgeführte Dokumentationsroutinen umfassen, und/oder, dass die Datenquellen (4) anwenderunabhängige Datenquellen (4), insbesondere Wetterdatenquellen, umfassen.

6. Verfahren nach einem der vorhergehenden Ansprüche, **dadurch gekennzeichnet, dass** die Rohdaten (5) Daten umfassen, die innerhalb eines vorgegebenen Zeitraums, vorzugsweise eines Monats oder einer Woche oder eines Tages, vor dem Stellen der Analyseanfrage (8) erzeugt wurden, und/oder, dass die Rohdaten (5) Echtzeit-Rohdaten umfassen.

7. Verfahren nach einem der vorhergehenden Ansprüche, **dadurch gekennzeichnet, dass** die Serverplattform (2) eine Echtzeit-Datenbank aufweist und dass zumindest ein Teil der landwirtschaftlichen Datenquellen (4) mehrfach, insbesondere kontinuierlich, Echtzeit-Rohdaten an die Echtzeit-Datenbank übermittelt und das Analysetool (1) diese in der Aggregationsroutine zu den Zustandsdaten (9) aggregiert.

8. Verfahren nach einem der vorhergehenden Ansprüche, **dadurch gekennzeichnet, dass** ein Benchmarkingtool der Serverplattform (2) aus den Rohdaten (5) Benchmarking-Daten erzeugt und dass das Benchmarkingtool die Rohdaten (5) eines Anwenders (6) mit den Benchmarking-Daten vergleicht, vorzugsweise, dass das Benchmarkingtool dem Anwender (6) basierend auf dem Vergleich landwirtschaftliche Maßnahmen zur Verbesserung der Arbeitsprozesse des Anwenders (6), vorzugsweise hinsichtlich der Verwendung, insbesondere einer Reduktion der Verwendung, der landwirtschaftlichen Hilfsmittel und/oder Betriebsmittel, vorschlägt.

9. Verfahren nach einem der vorhergehenden Ansprüche, **dadurch gekennzeichnet, dass** die Analyseanfrage (8) eine Marktanalyseanfrage ist, die einen Verlauf der Nutzung des Hilfsmittels und/oder Betriebsmittels in einer aktuellen landwirtschaftlichen Periode betrifft, vorzugsweise, dass die Zustandsdaten (9) Nutzungsverlaufsdaten und mit den Nutzungsverlaufsdaten verknüpfte Lokalisationsdaten umfassen.

10. Verfahren nach einem der vorhergehenden Ansprüche, **dadurch gekennzeichnet, dass** in der Dokumentationsroutine ein Anwender (6) landwirtschaftliche Arbeitsprozesse mittels eines Dokumentationstools der Serverplattform (2) durch Eingabe der Rohdaten (5) dokumentiert, vorzugsweise, dass in der Dokumentationsroutine das Dokumentationstool dem Anwender (6) Fragen zur Beantwortung vorgibt und der Anwender (6) die Fragen beantwortet, weiter vorzugsweise, dass die Fragen basierend auf der Analyseanfrage (8) erzeugt und/oder angepasst werden.

11. Verfahren nach einem der vorhergehenden Ansprüche, **dadurch gekennzeichnet, dass** die landwirtschaftlichen Datenquellen (4) verschiedenen Anwendern (6) zugeordnete Sensoren (11), insbesondere Sensoren (11) landwirtschaftlicher Arbeitsmaschinen (10), umfassen, vorzugsweise, dass die Zustandsdaten (9) Echtzeit-Sensordaten der Sensoren (11) umfassen.

12. Verfahren nach einem der vorhergehenden Ansprüche, **dadurch gekennzeichnet, dass** die Serverplattform dem Analysten (7) eine Analyseumgebung bereitstellt, dass der Analyst (7) in der Analyseumgebung die Analyseanfrage (8) stellen kann, vorzugsweise, dass die Zustandsdaten (9) und/oder ein auf den Zustandsdaten (9) basierendes Analyseergebnis regelmäßig von der Serverplattform auf Basis der Echtzeit-Rohdaten aktualisiert wird.

13. Verfahren zum optimierten Bereitstellen landwirtschaftlicher Hilfsmittel und/oder Betriebsmittel durch den Analysten (7) unter Verwendung der Zustandsdaten (9) nach einem der vorhergehenden Ansprüche, **dadurch gekennzeichnet, dass** der Analyst (7), insbesondere automatisch, basierend auf den Zustandsdaten (9) landwirtschaftliche Hilfsmittel und/oder Betriebsmittel für einen Anwender (6) bereitstellt.

14. Serverplattform ausgestaltet zur Verwendung in einem Verfahren nach einem der vorhergehenden Ansprüche.
